# EUROPEAN PATENT SPECIFICATION

(11) **EP 0 633 294 B1**
(45) Date of publication and mention of the grant of the patent: **10.06.1998**
(21) Application number: 94202755.8
(22) Date of filing: 27.11.1990
(51) Int. Cl.: C08L 79/08, C08L 67/00, C08L 71/00

(54) **Polyimide based resin composition**
Polyimidhaltige Harzzusammensetzung
Composition de résine à partir de polyimide

(30) Priority: 30.11.1989 JP 309100/89; 05.12.1989 JP 314394/89; 30.07.1990 JP 199058/90
(43) Date of publication of application: 11.01.1995
(62) Divisional of application: 90312859.3
(73) Proprietor: MITSUI CHEMICALS, INC., Tokyo (JP)
(72) Inventor: Tsutsumi, Toshihiko, Nagoya-schi, Aichi-ken 458 (JP); Nakakura, Toshiyuki, Yokohama-shi, Kanagawa-ken 247 (JP); Morikawa, Shuichi, Hakone-machi, Kanagawa-ken 250-03 (JP); Shimamura, Katunori, Minamiashigara-shi, Kanagawa-ken 250-01 (JP); Takahashi, Toshiaki, Hatano-shi, Kanagawa-ken 257 (JP); Koga, Nobuhito, Yokohama-shi, Kanagawa-ken 836 (JP); Morita, Atsushi, Yokohama-shi, Kanagawa-ken 244 (JP); Yamaguchi, Akihiro, Kamakura-shi, Kanagawa-ken 248 (JP); Ohta, Mashiro, Ohmuta-shi Fukuoka-ken 836 (JP)
(74) Representative: Rackham, Anthony Charles

(56) References cited:
- EP-A- 0 163 464
- EP-A- 0 313 407
- FR-A- 2 311 815

## Description

The present invention relates to a molding resin composition which comprises polyimide resin as a principal component. More particularly, the invention relates to a polyimide-based moulding resin composition which comprises polyimide resin and polyether ketone resin and/or polyester resin and is excellent in thermal resistance, chemical resistance, mechanical strength and processability.

Conventionally, polyimide has extremely outstanding thermal resistance, is excellent in mechanical strength and dimensional stability, and additionally has flame retardance and electrical insulation property. Polyimide has hence been used in areas such as electrical and electronic parts, space and aeronautic members, and transportation equipment. In the future, it is expected that the use of polyimide will be extended to areas where thermal resistance is required. Various kinds of polyimide which exhibit excellent properties have been developed.

Although polyimide is excellent in thermal resistance, means such as sinter moulding is generally required in the case of using polyimide as a moulding material. Even though polyimide is thermoplastic and melt-moldable, processing under high temperature and high pressure is required in many cases. When polyimide is processed under such high temperature and pressure, polyimide is, though excellent in thermal resistance, thermally deteriorated or oxidized which decreases mechanical strength and which makes moulding of thin-walled articles difficult.

Some kinds of polyimide have slow rates of crystallization in the processing stage and moulded articles can be obtained in an amorphous state. Even though heat treatment is carried out in order to enhance the crystallinity of such polyimides, dimensional changes resulting from crystallization have led severe restrictions on the application of such polyimides to areas such as precision parts.

On the other hand, when processability is improved, the polyimide has a lowered glass transition temperature and is soluble in halogenated hydrocarbons. That is, the polyimide has decreased performance in view of thermal and solvent resistances. Consequently, conventionally proposed polyimides have both merits and drawbacks, and, it has been desired to accomplish further improvement.

The present inventors have also found a novel polyimide resin having recurring units represented by the formula (I): 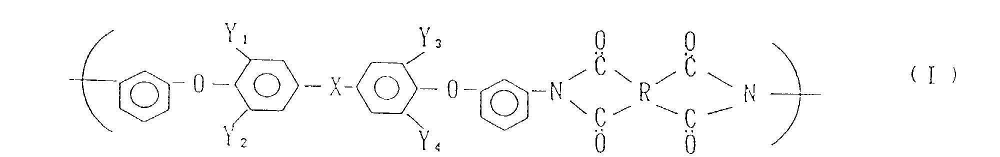 wherein X is a direct bond, divalent hydrocarbon having from 1 to 10 carbon atoms, hexafluorinated isopropylidene, carbonyl, thio or sulfonyl; Y₁, Y₂, Y₃ and Y₄ are individually hydrogen, lower alkyl, lower alkoxy, chlorine or bromine; R is a tetravalent radical selected from an aliphatic having 2 or more carbon atoms, alicyclic, monocyclicaromatic or fused polycyclic aromatic radical or a polycyclic aromatic radical connected to each other through a direct bond or a bridge member [Japanese Laid-Open Patent SHO 61-143478(1986), 62-68817(1987), 62-86021(1987), 62-235381(1987) and 63-128025(1988)] corresponding to EP-A-313 407.

The polyimide resin thus found in a thermal-resistant resin having various favourable properties such as excellent mechanical strength, thermal property, electrical property and solvent resistance in addition to its essential thermal resistance.

The polyimide resin is excellent in thermal resistance, mechanical strength and electrical properties as compared with conventional engineering plastics represented by polyethylene terephthalate, polybutylene terephthalate, polyether sulphone, polysulfone and polyphenylene sulphide. Consequently, the polyimide resin having improved processability in addition to its substantially outstanding characteristics can be expected to be use in fields where conventional engineering plastics are not satisfactory.

EP-A-313 407 also says that such polyimides can be used with other thermoplastic resins so long as no adverse effects are found.

An object of the present invention is to provide a polyimide-based moulding resin composition having excellent flowability in a molten state in addition to its substantially outstanding characteristics.

Another object of the present invention is to provide a polyimide-based resin composition having an increased rate of crystallization and an improved dimensional stability of moulded articles in a heat-treatment step.

According to the present invention there is provided a resin composition comprising from 90 to 60% by weight of a polyimide having recurring units represented by the formula ( I ) : 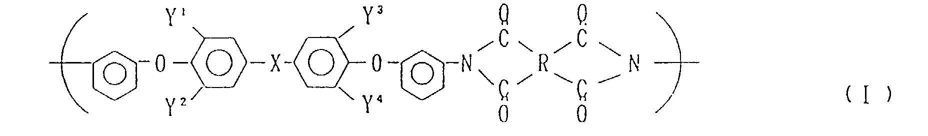 in which X is a direct bond, divalent hydrocarbon having from 1 to 10 carbon atoms, hexafluorinated isopropylidene, carbonyl, thio or sulphonyl, Y¹, Y², Y³ and Y⁴ are individually hydrogen, methyl, methoxy, chlorine or bromine, R is an aliphatic radical having 2 or more carbon atoms, an alicyclic radical, a monocyclic aromatic radical, a fused polycyclc aromatic radical, or a polycyclic aromatic radical represented by the formula ( II ) : 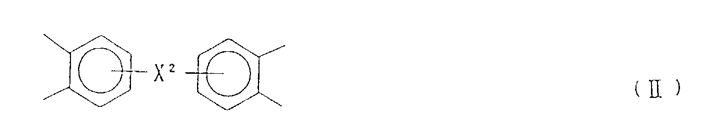 X² is a direct bond, -O-,-S-,-SO²-, -CH₂-, -CO-,-C(CH₃)₂₋. -C(CF₃)₂-, 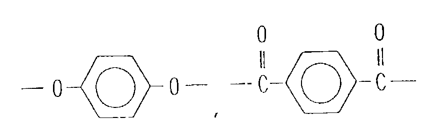 or 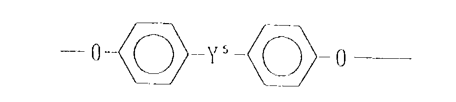 and Y⁵ is a direct bond, -O-, -S-, -SO₂-, -CH₂-, -CO-, -C(CH₃)₂-, or -C(CF₃)₂-,
and from 10 to 40% by weight of polyether ketone resin having recurring structural units represented by the formula ( III ) : 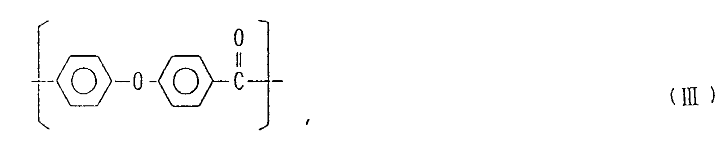 and optionally a polyester resin.
The resin composition of the present invention has remarkably improved processability and enhanced dimensional stability of moulded articles upon heat treatment (annealing) step without impairing the excellent characteristics of the polyimide resin.

The polyimide of the above formula I can be prepared by reacting an ether diamine represented by the formula: 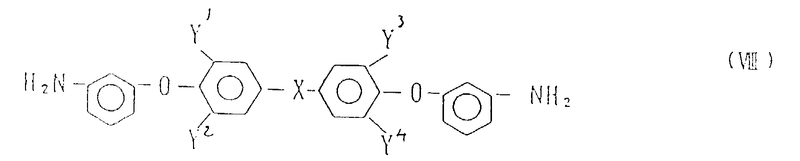 in which X, Y¹, Y², Y³ and Y⁴ are the same as above, and preferably and ether diamine represented by the formula: 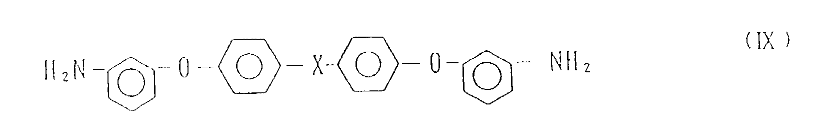 in which X is the same as above, with one or more tetracarboxilic dianhydrides.

That is, the polyimide can be prepared by reacting the ether diamine with the tetracarboxilic dianhydride in a solvent and then thermally or chemically imidizing the resultant polygamic acid.

The reaction temperature is usually 250°C or less. No particular restriction is imposed upon the reaction pressure. The reaction can be satisfactorily carried out under atmospheric pressure.

The reaction time varies depending upon the tetracarboxylic dianhydride used, the kind of solvent, and the reaction temperature.

The reaction is usually carried out for a time sufficient to complete formation of the polygamic acid intermediate. Sufficient reaction times are 24 hours or less, an hour or less in some cases.

The above reaction provides the polygamic acid corresponding to the recurring structural units of the formula I. The polygamic acid is successively heat-dehydrated at 100 to 400 °C or chemically imidized by using a common imidizing agent to obtain the polyimide having recurring structural units of the formula I.

Polyimide can also be prepared by simultaneously conducting polygamic acid formation and the heat-imidizing reaction.

Exemplary diamine compounds of the above formula VIII include, for example:
bis [4-(3-aminophenoxy)phenyl] methane,
1,1-bis [4-(3-aminophenoxy)phenyl] ethane,
1,2-bis [4-(3-aminophenoxy)phenyl] ethane,
2,2-bis [4-(3-aminophenoxy)phenyl]propane,
2- [4-(3-aminophenoxy)phenyl] -2-(4-(3-aminophenoxy)-3-methylphenyl] propane,
2,2-bis [4-(3-aminophenoxy)-3-methylphenyl] propane,
2- [4-(3-aminophenoxy)phenyl] -2- [4-(3-aminophenoxy)-3,5-dimethylphenyl] propane,
2,2-bis [4-(3-aminophenoxy)-3,5-dimethylphenyl] propane,
2,2-bis [4-(3-aminophenoxy)phenyl] butane,
2,2-bis [4-(3-aminophenoxy)phenyl] -1,1,1,3,3,3-hexafluoropropane,
4,4'-bis(3-aminophenoxy)biphenyl,
4,4'-bis(3-aminophenoxy)-3-methylbiphenyl,
4,4'-bis(3-aminophenoxy)-3,3'-dimethylbiphenyl,
4,4'-bis(3-aminophenoxy)-3,5-dimethylbiphenyl,
4,4'-bis(3-aminophenoxy)-3,3',5,5'-tetramethylbiphenyl,
4,4'-bis(3-aminophenoxy)-3,3'-dichlorobiphenyl,
4,4'-bis(3-aminophenoxy)-3,5-dichlorobiphenyl,
4,4'-bis(3-aminophenoxy)-3,3',5,5'-tetrachlorobiphenyl,
4,4'-bis(3-aminophenoxy)-3,3'-dibromobiphenyl,
4,4'-bis(3-aminophenoxy)-3,5-dibromobiphenyl,
4,4'-bis(3-aminophenoxy)3,3',5,5'-tetrabromobiphenyl,
bis [4-(3-aminophenoxy)phenyl] ketone,
bis [4-(3-aminophenoxy)phenyl] sulfide,
bis [4-(3-aminophenoxy)-3-methoxyphenyl] sulfide,
[4-(3-aminophenoxy)phenyl] [4-(3-aminophenoxy)-3,5-dimethoxyphenyl] sulfide,
bis [4-(3-aminophenoxy)-3,5-dimethoxyphenyl] sulfide,
bis [4-(3-aminophenoxy)phenyl] sulfone,
bis [4-(3-aminophenoxy)phenyl] ether,
bis [4-(4-aminophenoxy)phenyl] ether,
1,4-bis [4-(3-aminophenoxy)phenoxy] benzene,
1,4-bis [4-(4-aminophenoxy)phenoxy] benzene,
1,4-bis [4-(3-aminophenoxy)benzoyl] benzene,
1,3-bis [4-(3-aminophenoxy)benzoyl] benzene,
bis [4-{4-(4-aminophenoxy)phenoxy} phenyl] sulfone,
and bis [4- {4-(4-aminophenoxy)phenoxy} phenyl] ketone. The diaminocompound may be used a single compound or a mixture thereof.

The tetracarboxylic dianhydride which is another raw material for preparing polyimide of the formula I is represented by the formula X : 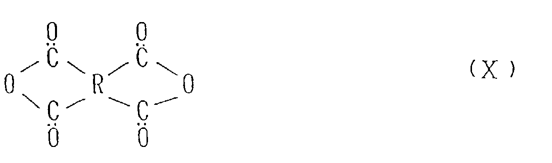 in which R is the same as above.

In the tetracarboxylic dianhydride represented by the formula X , R is preferably a tetravalent radical represented by the formula: 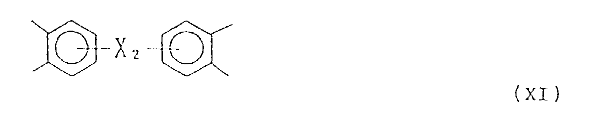 in which X₂ is as defined above.

The tetracarboxylic dianhydrides used as a raw material in the preparation of polyimide include, for example,
ethylenetetracarboxylic dianhydride,
butanetetracarboxylic dianhydride,
cyclopentanetetracarboxylic dianhydride,
pyromellitic dianhydride,
3,3',4,4'-benzophenonetetracarboxylic dianhydride,
2,2',3,3'-benzophenonetetracarboxylic dianhydride,
3,3',4,4'-biphenyltetracarboxylic dianhydride,
2,2',3,3'-biphenyltetracarboxylic dianhydride,
2,2-bis(3,4-dicarboxyphenyl)propane dianhydride,
2,2-bis(2,3-dicarboxyphenyl)propane dianhydride,
bis (3,4-dicarboxyphenyl)ether )ether dianhydride,
bis(3,4-dicarboxyphenyl)sulfone, dianhydride,
1,1-bis(2,3-dicarboxyphenyl)ethane dianhydride,
bis(2,3-dicarboxyphenyl)methane dianhydride,
bis(3,4-dicarboxyphenyl)methane dianhydride,
4-[4-(3,4-dicarboxyphenoxy)phenoxy] phthalic dianhydride,
2,3,6,7-naphthalenetetracarboxylic dianhydride,
1,4,5,8-naphthalenetetracarboxylic dianhydride,
1,2,5,6-naphthalenetetracarboxylic dianhydride,
1,2,3,4-benzenetetracarboxylic dianhydride,
3,4,9,10-perylenetetracarboxylic dianhydride,
2,3,6,7-anthracenetetracarboxylic dianhydride,
and 1,2,7,8-phenanthrenetetracarboxylic dianhydride.

The tetracarboxylic dianhydride can be used singly or in combination.

The polyimide used in the composition of the invention is prepared by using the above etherdiamine as a raw material. The polyimide prepared by simultaneous use of other diamines can also be used for the composition of the invention as long as no adverse effect is found on the good properties of the polyimide.

Exemplary diamines which can be simultaneously used include
m-phenylenediamine, o-phenylenediamine, p-phenylenediamine,
m-aminobenzylamine, p-aminobenzylamine, bis(3-aminophenyl) ether,
(3-aminophenyl)(4-aminophenyl) ether, bis(4-aminophenyl) ether,
bis(3-aminophenyl) sulfide, (3-aminophenyl)(4-aminophenyl) sulfide,
bis(4-aminophenyl) sulfide, bis(3-aminophenyl) sulfoxide,
(3-aminophenyl)(4-aminophenyl) sulfoxide,
bis(4-aminophenyl) sulfoxide, bis(3-aminophenyl) sulfone,
(3-aminophenyl)(4-aminophenyl) sulfone, bis(4-aminophenyl) sulfone,
3,3'-diaminobenzophenone, 3,4'-diaminobenzophenone,
4,4'-diaminobenzophenone, bis [4-(4-aminophenoxy)phenyl] methane,
1,1-bis [4-(4-aminophenoxy)phenyl] ethane,
1,2-bis [4-(4-aminophenoxy)phenyl] ethane,
2,2-bis [4-(4-aminophenoxy)phenyl] propane,
2,2-bis [4-(4-aminophenoxy)phenyl] butane,
2,2-bis [4-(4-aminophenoxy)phenyl] -1,1,1,3,3,3-hexafluoropropane,
1,3-bis(3-aminophenoxy)benzene, 1,3-bis(4-aminophenoxy)benzene,
1,4-bis(3-aminophenoxy)benzene, 1,4-bis(4-aminophenoxy)benzene,
4,4'-bis (4-aminophenoxy) biphenyl,
bis (4-(4-aminophenoxy)phenyl) ketone,
bis (4-(4-aminophenoxy)phenyl) sulfide,
bis (4-(4-aminophonoxy)phenyl) sulfoxide,
bis (4-(4-aminophenoxy)phenyl) sulfone,
bis (4-(3-aminophenoxy)phenyl) ether,
bis (4-(4-aminophenoxy)phenyl) ether,
1,4-bis (4-(4-aminophenoxy)benzyl) benzene,
and 1,4-bis (4-(4-aminophenoxy)benzyl) benzene.

The resin composition of the present invention can be obtained by blending the above polyimide resin with the polyether ketone resin, or a mixture of that polyether ketone resin with a polyester resin.

A representative example of a polyether ketone resin having recurring units represented by the above formula III 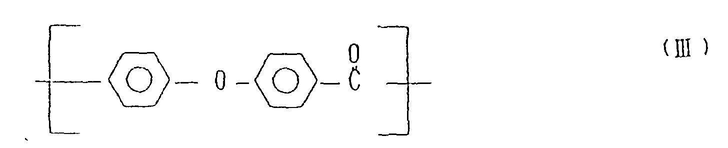 is the commercial product VICTREX PEK (Trade Mark of I.C.I. Ltd.).

Examples of polyester resins which can be mixed with the polyether ketone resin include the following types of resins:
1. A polymer obtained by the reaction of at least one divalent phenol, aliphatic diol and/or alicyclic diol with at least one dicarboxylic acid and/or a dicarboxylic acid derivative.
② A copolymer consisting of at least three components and having a polyester structure as a whole, the copolymer comprising at least one divalent phenol, aliphatic diol and/or alicyclic diol; at least one dicarboxylic acid and/or a dicarboxylic acid derivative; and additionally at least one hydroxycarboxylic and/or a hydroxycarboxylic acid derivative.

The copolymer may contain polyester obtained by reacting at least one hydroxycarboxylic acid and/or its derivative.

Exemplary polyesters include those illustrated below.
1) The polyester resin consisting principally of one or two component polyesters obtained by the reaction of a divalent phenol, aliphatic diol or alicyclic diol with a dicarboxylic acid or dicarboxylic acid derivative, or with a hydroxycarboxylic acid or hydroxycarboxylic acid derivative, and having recurring units represented by the following formulas: 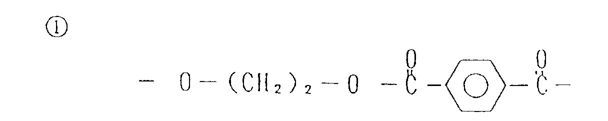 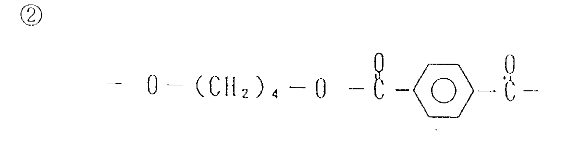 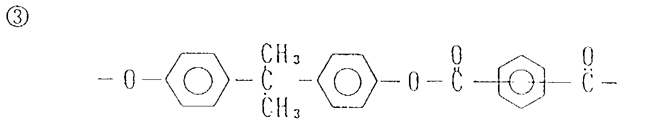 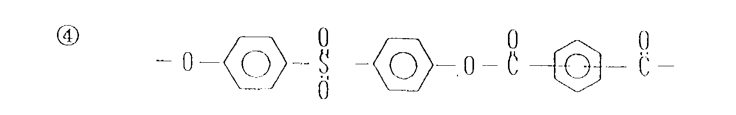 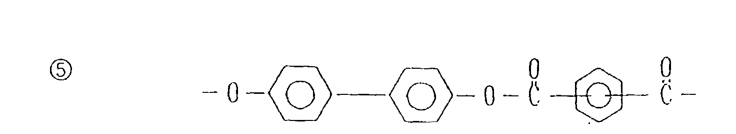 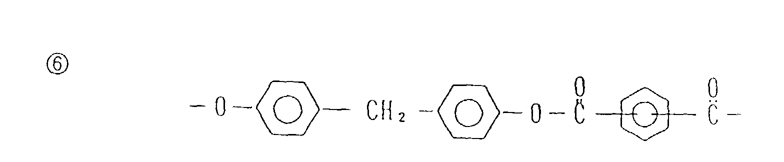 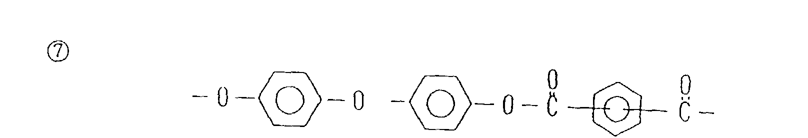 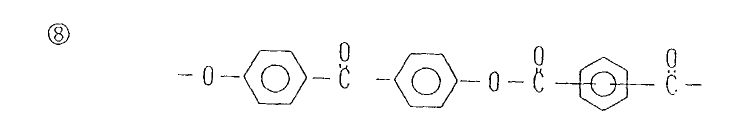 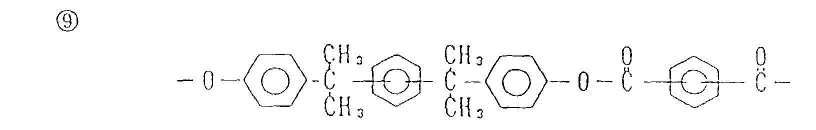 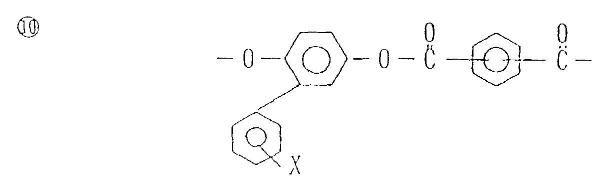 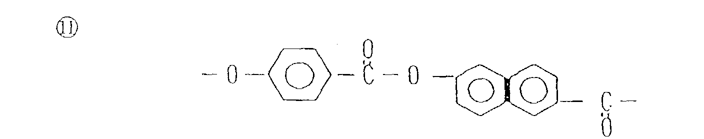 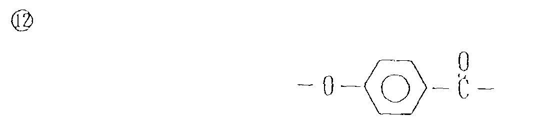 wherein two carbonyl radicals are situated with respect to each other in the ortho, meta or para position or mixture of these positions in the formulas from ③ to 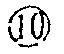 , and X is hydrogen, fluorine, chlorine, bromine or an alkyl radical in the formula 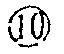 .
2) The copolymer consisting of at least three components, a having polyester structure as a whole, and having a combination of a divalent phenol or diol radical, dicarboxylic acid radical and a hydroxycarboxylic acid radical, the combination being illustrated by the formulas:

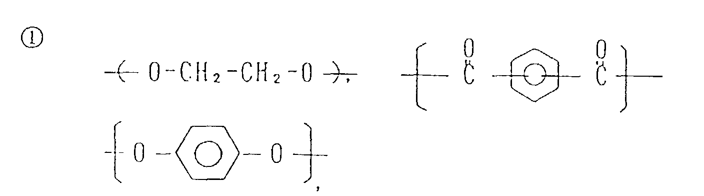

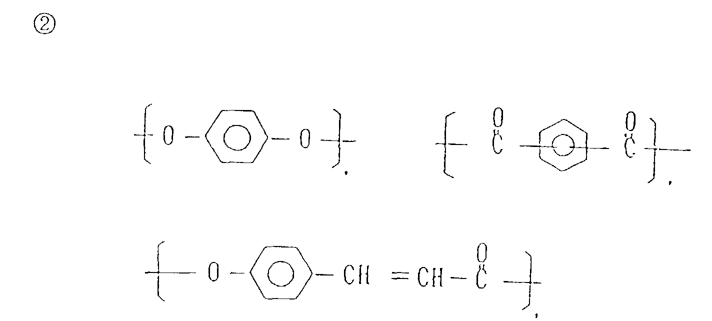

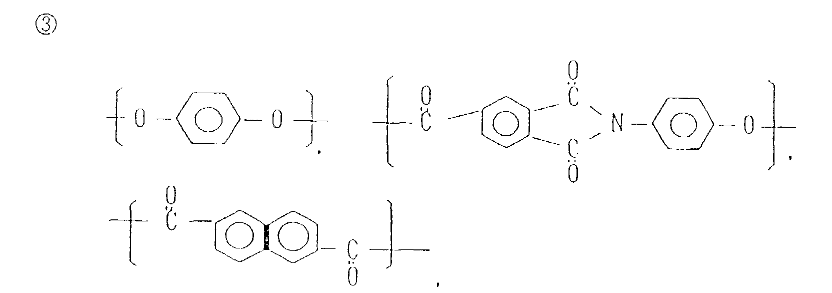

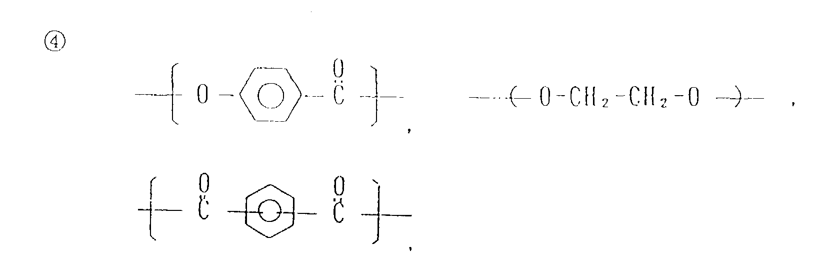

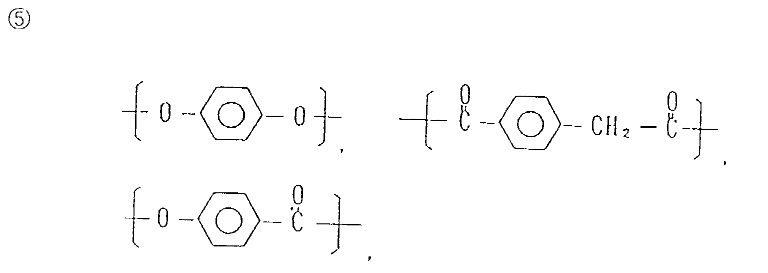

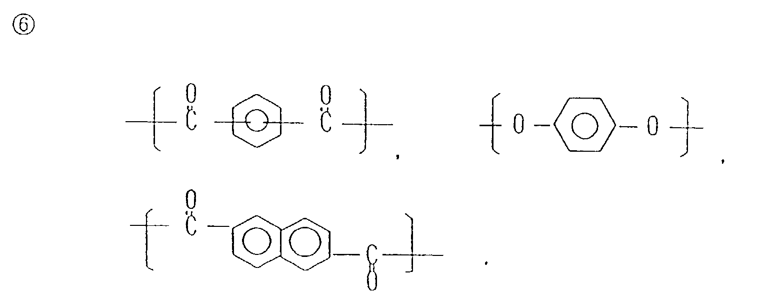

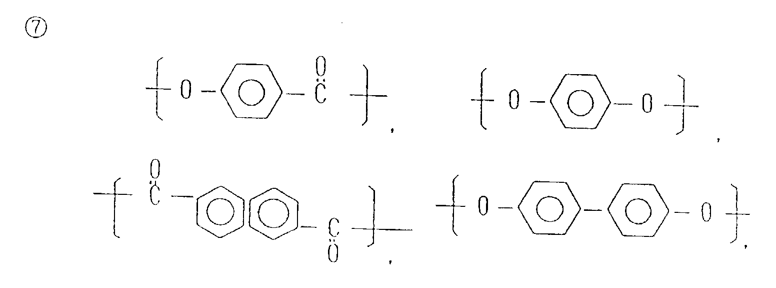

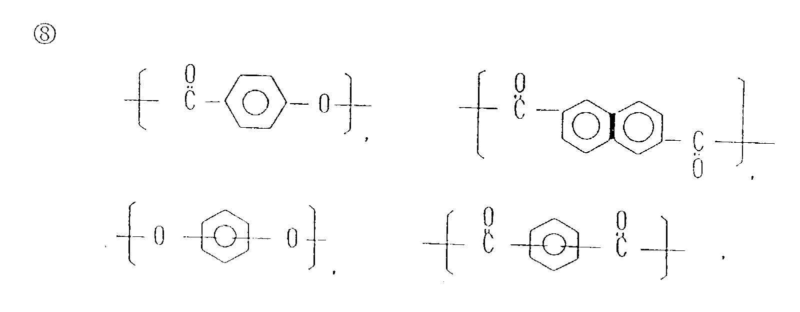

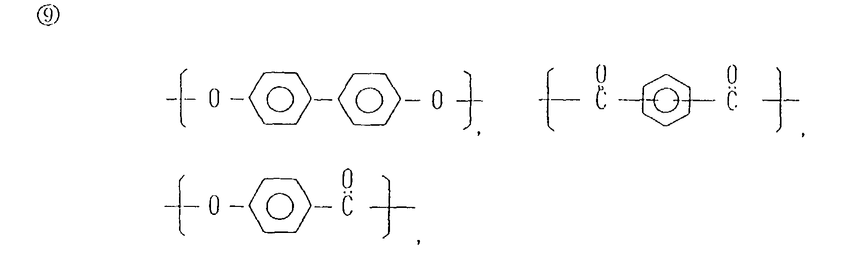

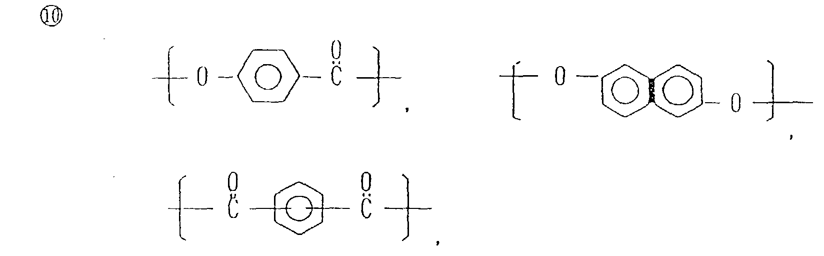

The polyester used for the invention is of course not limited to those illustrated above.

Many kinds of polyesters having various polymerization degrees are commercially available and the polyester having a suitable melt viscosity characteristic for the desired composition can be arbitrarily selected in the market.

The polyester resin preferably has recurring structural units represented by the formula : 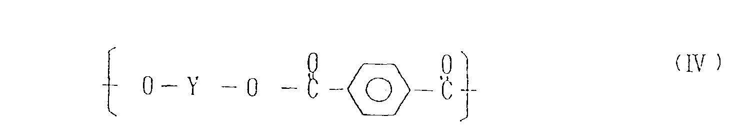 wherein Y is an aliphatic radical having from 1 to 4 carbon atoms or a radical represented by 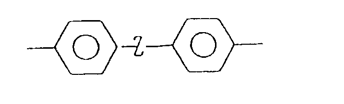 wherein Z is a direct bond, -C(CH₃)₂₋, -SO₂-, -CH₂-, -O-, -CO-, or 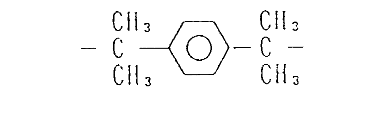 ; the polyester resin can more preferably form an anisotropic molten phase; and the most preferred polyester resin forms the molten phase at a temperature of 420 °C or less. The combination of such polyester resins with a polyimide are described and claimed in EP-B-430 640 from which this case was divided.

The polyester which forms such anisotropic molten phase, that is, the polyester which is a so-called thermotropic liquid-crystal polymer is most preferably obtained by carrying out polymerization so that polyester bond is formed by basic structural units of the formulae.

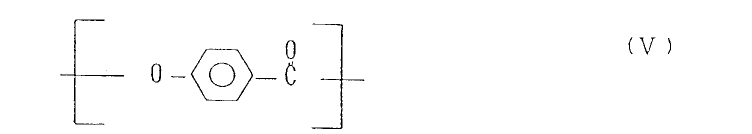

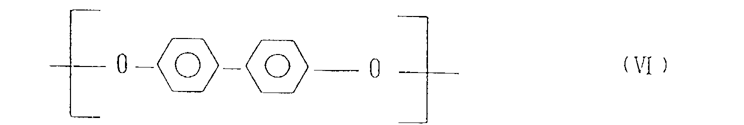

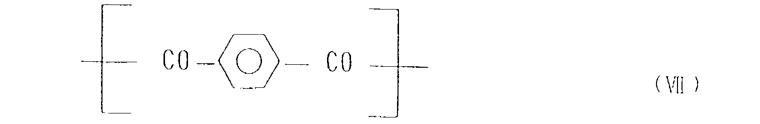

The resin composition of the invention exhibits remarkable low melt viscosity in a high temperature range of 300 °C or more.

The composition of the invention can be prepared by generally known processes. For example, preferred processes are illustrated below.
(1) A process for preparing powder by preblending polyimide resin powder and polyester ketone resin powder in a mortar, Henshel mixer, drum blender, tumbler, ball mill and ribbon blender.
② A process for preparing powder by previously dissolving or suspending polyimide resin powder in an organic solvent, adding polyether ketone resin to the resulting solution or suspension, dispersing uniformly and thereafter removing the solvent.
③ A process for preparing powder by suspending polyether ketone resin in an organic solvent solution of polyamic acid which is the precursor of polyimide in the invention, carrying out heat-treatment at 100 to 400 °C or chemical imidization by using of a common imidizing agent, and then removing the solvent.

The powdery polyimide resin composition thus obtained can be used as such for various moulding processes, for example, injection moulding, compression moulding and transfer moulding. However, moulding is more preferably carried out after melting and mixing each component of the composition.

In the preparation of a melt-mixed composition, it is also a simple and effective method to mix and mould powders with each other, pellets with each other, or powder and pellets.

Melt-mixing can be conducted by utilizing equipment for melt-blending common rubber or plastics, for example, hot rolls, Banbury mixer, Brabander and an extruder.

Melt-mixing is carried out in the range of from the melt temperature to the decomposition-initiating temperature of the formulation. The temperature is usually from 250 to 420 °C, preferably from 300 to 400 °C.

As to the process for moulding the resin composition of the invention, suitable process is injection moulding or extruding which is a process capable of forming a uniformly melted blend and which has a high productivity. Other moulding processes such as transfer moulding compression moulding and sinter moulding can also be applied without any problem.

In the present invention, one or more additives can be added to the composition, if desired.

Exemplary additives which can be used include, fillers such as calcium carbonate, mica, glass beads, graphite, and molybdenum disulfide; fibre reinforcements such as glass fibres, carbon fibres, ceramic fibres, aramide fibres, potassium titanate fibres and metal fibres; lubricants; release agents; stabilizers; colorants; other thermoplastic resin such as polyphenylene sulphide, polyether imide, polyether sulphone, and polyether ether ketone; and thermosetting resins such as phenol resin, epoxy resin, silicone resin and polyamide imide resin.

The present invention will hereinafter be illustrated further in detail by way of Examples and Comparative Examples.

In the Examples and Comparative Examples, physical properties were determined by the following methods.
○ Inherent viscosity: 0.5 g of polyimide powder was dissolved in 100 *mℓ* of a solvent mixture consisted of p-chlorophenol/phenol in a ratio of 9/1 by weight. Measurement was conducted after cooling the solution to 35 °C
○ Heat distortion temperature (HDT):
   Measured in accordance with ASTM D-648.
○ Melt Flow Ratio (MFR):
   Measurement was conducted at 400 °C, under 1.05 kg load in accordance with JIS K-7210.
○ Spiral flow length :
   Measurement was conducted at a cylinder temperature of 400 °C, mold temperature of 180°C, injection pressure of 981 bar (1000 kg/cm²) and cavity thickness of 1 mm.
○ Heat shrinkage :
   Heat treatment was carried out under below described conditions on a tensile test specimen in accordance with ASTM D-638. Dimensional change in the longer direction of the specimen was measured before and after the heat treatment. Heat treatment carried out in three heating steps, 150 °C × 20 hrs → 260 °C × 20 hrs → 300 °C × 2 hrs.
○ Wrapage:
   Injection moulded plate (75 × 100 × 2 mm) is heated and change of warpage height in longer direction was measured between before and after treatment.

### Examples 1 to 3 and Comparative Examples 1 and 2

Polyimide powder having an inherent viscosity of 0.45 *dℓ*/g was prepared from 4,4'-bis(3-aminophenoxy)biphenyl and pyromellitic dianhydride. The polyimide powder was dry blended with aromatic polyether ketone VICTREX PEK 220P (Trade Mark of I.C.I. Ltd.) in compositions as illustrated in the Table. The mixtures obtained were melt-kneaded with a twin screw extruder 30 mm in diameter at a cylinder temperature of 380 to 410°C and extruded and cut into uniform pellets.

MFR of the pellets was measured and results are illustrated in Table 2.

The pellets were injection molded to obtain specimens having dimensions of 6 mm × 70 mm × 3 mm. HDT was measured on these specimens and results are illustrated in the Table.

### Example 4 and Comparative Examples 3 and 4

Polyimide powder having an inherent viscosity of 0.46 *dℓ*/g was prepared from bis [4-(3-aminophenoxy)phenyl) sulfide and pyromellitic dianhydride. The polyimide powder obtained was dry blended with aromatic polyether ketone VICTREX PEK 220P (Trade Mark of I.C.I. Ltd.) in the compositions as illustrated in the Table. The mixtures obtained were evaluated by the same procedures as carried out in Example 1. Results are illustrated in the Table.

### Example 5 and Comparative Examples 5 and 6

Polyimide powder having an inherent viscosity of 0.45 *dℓ*/g was prepared from 2,2-bis [4-(3-aminophenoxy)phenyl] propane and 3,3',4,4'-benzophenonetetracarboxylic dianhydride.

The polyimide powder obtained was dry blended with aromatic polyether ketone VICTREX PEK 220P(Trade Mark of I.C.I. Ltd.) in compositions as illustrated in the Table. The mixtures obtained were evaluated by the same procedures as carried out in Example 1. Results are illustrated in the Table.

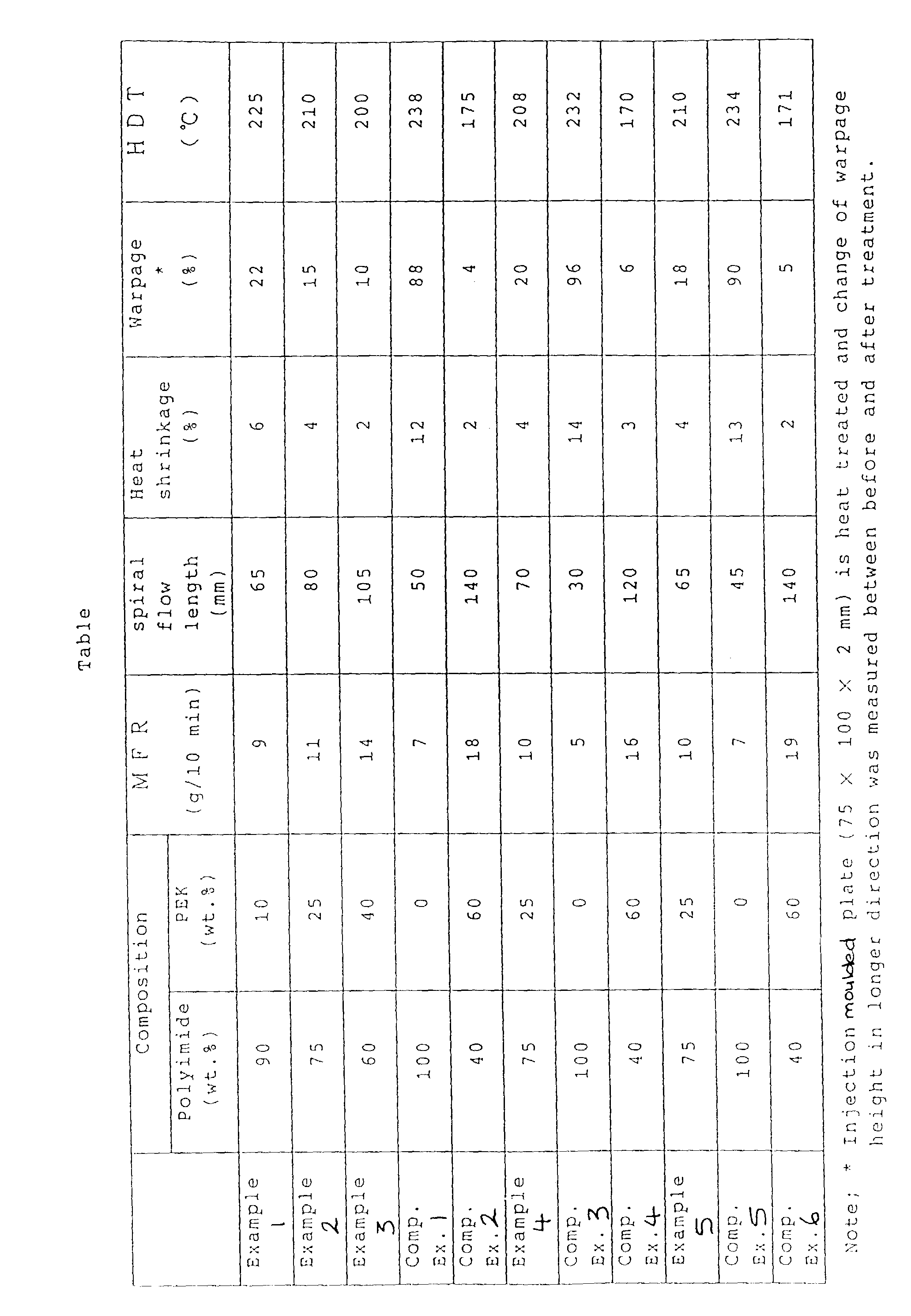

## Claims

1. A resin composition comprising from 90 to 60% by weight of a polyimide having recurring units represented by the formula: 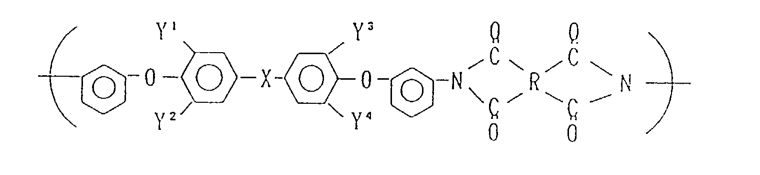 in which X is a direct bond, divalent hydrocarbon having from 1 to 10 carbon atoms, hexafluorinated isopropylidene, carbonyl, thio or sulphonyl, Y¹, Y², Y³ and Y⁴ are individually hydrogen, methyl, methoxy, chlorine or bromine, R is an aliphatic radical having 2 or more carbon atoms, an alicyclic radical, a monocyclic aromatic radical, a fused polycyclic aromatic radical, or a polycyclic aromatic radical represented by the formula: 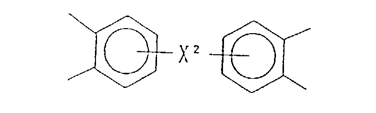 X² is a direct bond, -O-,-S-,-SO₂-,-CH₂-, -CO-, -C(CH₃)₂₋. -C(CF₃)₂-, 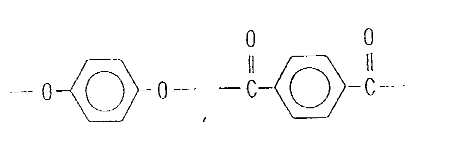 or 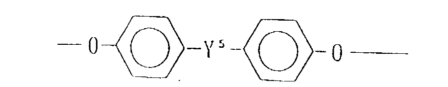 and Y⁵ is a direct bond, -O-, -S-, -SO₂-, -CH₂-, -CO-, -C(CH₃)₂-, or C(CF₃)₂-,
and from 10 to 40% by weight of polyether ketone resin having recurring structural units represented by the formula: 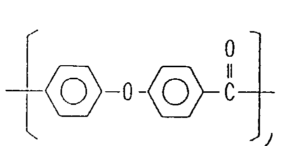 and optionally a polyester resin.

2. A resin composition as claimed in Claim 1 in which the polyimide is represented by the formula: 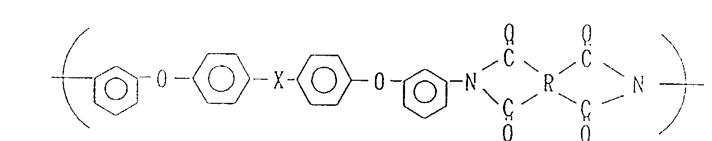 in which X and R are as defined in Claim 1.

## Patentansprüche

1. Eine Harzzusammensetzung, bestehend aus 90 bis 60 Masse-% eines Polyimids mit wiederkehrenden Einheiten der Formel 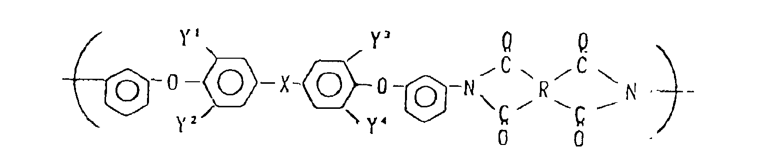 worin X eine direkte Bindung, ein bivalenter Kohlenwasserstoff mit 1 bis 10 Kohlenstoffatomen, hexafluoriertes Isopropyliden, Carbonyl, Thio oder sulfonyl, Y¹, Y², Y³ und Y⁴ im einzelnen Wasserstoff, Methyl, Methoxy, Chlor oder Brom darstellen, R ein aliphatisches Radikal mit 2 oder mehr Kohlenstoffatomen, ein alicyclisches Radikal, ein monocyclisches aromatisches Radikal, ein verschmolzenes polvcyclisches aromatisches Radikal oder ein polycyclisches aromatisches Radikal der Formel 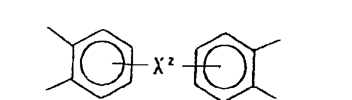 darstellen, X² eine direkte Bindung, -O-, -S-, -SO₂-, -CH₂-, -CO-, -C(CH₃)₂-, -C(CF₃)₂- 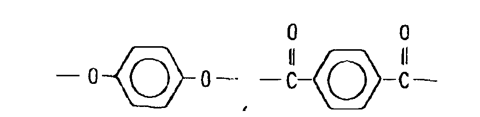 oder 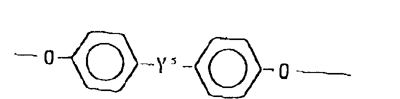 und Y⁵ eine direkte Bindung, -O-, -S-, -SO₂-, -CH₂-, -CO-, -C(CH₃)₂- oder -C(CF₃)₂- ist, zwischen 10 bis 40 Masse-% eines Polyetherketonharzes mit wiederkehrenden Struktureinheiten der Formel 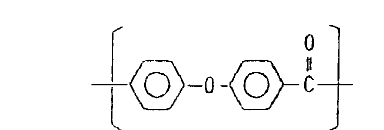 und wahlweise einem Polyesterharz.

2. Eine Harzzusammensetzung nach Anspruch 1, worin das Polyimid durch folgende Formel dargestellt wird: 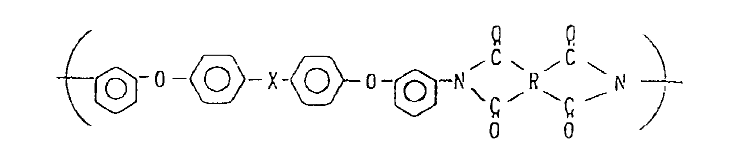 worin X und R wie in Anspruch 1 definiert werden.

## Revendications

1. Composition de résine comprenant de 90 à 60 % en poids d'un polyimide ayant des unités récurrentes représentées par la formule : 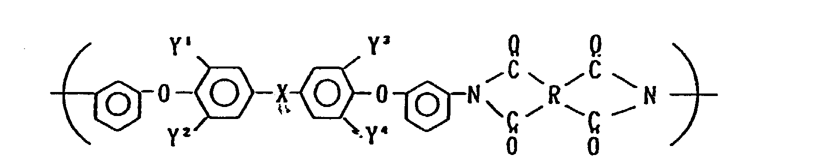 dans laquelle X est une liaison directe, un hydrocarbure bivalent ayant de 1 à 10 atomes de carbone, un isopropylidène hexafluoré, un carbonyle, un thio ou un sulphonyle, Y¹, Y², Y³ et Y⁴ sont individuellement l'hydrogène, un groupe méthyle, méthoxy, chlorure ou bromure, R est un radical aliphatique ayant 2 atomes de carbone ou plus, un radical alicyclique, un radical aromatique monocyclique, un radical aromatique polycyclique fusionné ou un radical aromatique polycyclique représenté par la formule : 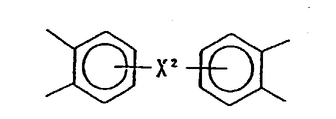 X² est une liaison directe, -O-, -S-, -SO₂-, -CH₂-, -CO-, -C(CH₃)₂⁻,-C(CF₃)₂⁻, 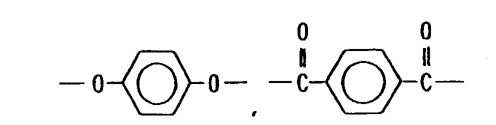 ou 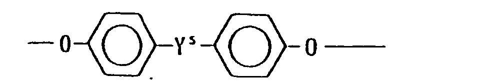 et Y⁵ est une liaison directe -O-, -S-, -SO₂-, -CH₂-, -CO-, -C(CH₃)₂⁻, ou -C(CF₃)₂⁻,
et de 10 à 40 % en poids d'une résine de cétone polyester ayant des unités structurelles récurrentes représentées par la formule : 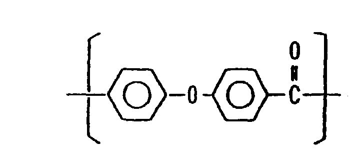 et en option une résine polyester.

2. Composition de résine selon la revendication 1, dans laquelle le polyimide est représenté par la formule : 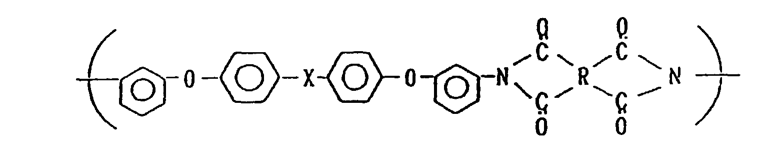 dans laquelle X et R sont tels que définis à la revendication 1.
